# EUROPEAN PATENT APPLICATION

(11) **EP 3 572 483 A1**
(43) Date of publication of application: **27.11.2019**
(21) Application number: 18859985.6
(22) Date of filing: 14.06.2018
(51) Int. Cl.: C10J 3/56, C10J 3/72

(54) **NOVEL CIRCULATING FLUIDIZED BED GASIFIER HAVING ELECTRIC HEATING-ASSISTED TEMPERATURE ADJUSTMENT FUNCTION, AND CONTROL METHOD THEREFOR**

(30) Priority: 30.03.2018 CN 201810276984
(71) Applicant: Zhongkejuxin Clean Energy & Hot Forging Equipment Research And Development Co., Ltd., Yancheng City, Jiangsu 224700 (CN)
(72) Inventor: ZHANG, Lianhua, Yancheng City, Jiangsu 224700 (CN); ZHANG, Hui, Yancheng City, Jiangsu 224700 (CN)
(74) Representative: Dilg, Haeusler, Schindelmann Patentanwaltsgesellschaft mbH
(86) International application number: PCT/CN2018/091239
(87) International publication number: WO 2019/184097

(57) **Abstract**

A electric heating temperature adjusting gasification furnace with circulating fluidized bed which relates to the technical field of coal gasification apparatus, comprising a gasification furnace and an electric heating device. The gasification furnace includes a circulating gasification chamber 1, an air distributor 2 and a precombustion chamber 3. The circulating gasification chamber 1 is located above the air distributor 2. The outlet of the precombustion chamber 3 is communicated with the lower port of the air distributor 2. The electric heating device includes an electric heating element 4, a temperature sensor 5 and a PLC programmable controller 6. The electric heating element 4 is a heat-resisting metal conductive heating element. The electric heating element 4, the temperature sensor 5 and the PLC programmable controller 6 are electrically connected between one another. The electric heating element 4 and the temperature sensor 5 are disposed within the gasification furnace. A first temperature sensing value and a second temperature sensing value are set for the temperature sensor. When the temperature sensor detects that the temperature in the furnace is lower than the first temperature sensing value, the PLC programmable controller instructs the electric heating element to heat the gasification furnace. When the temperature sensor detects that the temperature in the furnace reaches the second temperature sensing value, the PLC programmable controller instructs the electric heating element to stop working.

## Description

### Cross Reference to Related Applications

The present application claims the priority to the Chinese Patent Application No. 2018102769844, entitled "New Electric Heating Temperature Adjusting Gasification Furnace with Circulating Fluidized Bed", filed with CNIPA on March 30, 2018, the entirety of which is incorporated herein by reference.

### Technical Field

The present disclosure relates to the technical field of coal gasification apparatus, specifically to an auxiliary electric heating temperature adjusting device in gasification furnace with circulating fluidized bed, and particularly to a new electric heating temperature adjusting gasification furnace with circulating fluidized bed and a method of controlling the same.

### Background Art

In order to improve the clean utilization of coal and the carbon conversion efficiency in coal gasification process, people have designed various coal gasification apparatuses, which obtain energy by a combustion mode turning raw coal into coal gas. The emergence of each kind of coal gasification apparatus advances the coal gasification technology in various degrees. Circulating fluidized bed coal gasification apparatus is high-end equipment for clean and high-efficient utilization of coal, and also a modernized apparatus encouraged and generalized by National Development and Reform Commission and National Energy Administration. Such apparatus produces a coal gas containing a low content of pollutants, such as tar and the like, and having clean components, and also being able to significantly improve the combustion and gasification efficiency of coal, which can be a substituent of natural gas. Such apparatus finds favor in many hot processing enterprises due to its effects of assistance to supply-side reform, improvement of imbalance between supply and demand of natural gas, and resolution in excess coal production capacity.

However, in actual application, especially in the application of miniaturized coal gasification apparatus, there are still certain defects, mainly in the following aspects: the gasification of gasification furnace with circulating fluidized bed is inefficient; the coal slag, which is solid waste, contains a large amount of unburned raw coal for which additional auxiliary combustion is required; the technological process is complex, which makes it difficult to dispose the solid waste and thus pollutes the environment; miniaturization is difficult to carry out and the demand of medium and small sized hot processing enterprises also cannot be satisfied. In the prior art, the difficulty in real-time control of the operating temperature of the gasification furnace with circulating fluidized bed plus the long startup time result in the waste of a large amount of raw coal and power. Further, due to the complex coal gasification process, the temperature of the apparatus in operation needs to be adjusted constantly in real time. However, the existing apparatuses are monotonous in adjusting their internal temperature, which cannot adapt to the actual needs. The above defects are especially true in miniaturized apparatuses. Therefore, the traditional circulating fluidized bed needs further improvement and enhancement.

### Summary

In view of the deficiency in the traditional gasification furnace with circulating fluidized bed technology, the present disclosure provides a new electric heating temperature adjusting gasification furnace with circulating fluidized bed and a method of controlling the same, which achieves the purposes of stable temperature adjustment, fast response rate, and wide adjustment range by providing an auxiliary electric heating temperature adjusting device which controls the gasification temperature within the gasification furnace with circulating fluidized bed.

One aspect of the present disclosure includes a new electric heating temperature adjusting gasification furnace with circulating fluidized bed. The new electric heating temperature adjusting gasification furnace with circulating fluidized bed includes a gasification furnace and an electric heating device. The gasification furnace includes a circulating gasification chamber, an air distributor and a precombustion chamber. The circulating gasification chamber is located above the air distributor. The outlet of the precombustion chamber is communicated with the lower port of the air distributor. The electric heating device includes an electric heating element, a temperature sensor and a PLC programmable controller. The electric heating element is a heat-resisting metal conductive heating element. The electric heating element, the temperature sensor and the PLC programmable controller are electrically connected with one another. The electric heating element and the temperature sensor are disposed within the gasification furnace. A first temperature sensing value and a second temperature sensing value are set for the temperature sensor, and the second temperature sensing value is larger than the first temperature sensing value. When the temperature sensor detects that the temperature in the furnace is lower than the first temperature sensing value, the temperature sensor sends the detected signal to the PLC programmable controller, which will then instruct the electric heating element to heat the gasification furnace. When the temperature sensor detects that the temperature in the furnace reaches the second temperature sensing value, the temperature sensor sends the detected signal to the PLC programmable controller, which will then instruct the electric heating element to stop working.

Optionally, the present disclosure further includes a communicating pipe provided between the precombustion chamber and the air distributor at the bottom of the circulating gasification chamber. One end of the communicating pipe is communicated with a sidewall of the precombustion chamber. The other end of the communicating pipe is communicated with the bottom of the circulating gasification chamber through the air distributor. In the above, the end of the communicating pipe that is communicated with the precombustion chamber is lower than the end of the communicating pipe that is communicated with the circulating gasification chamber.

Optionally, the electric heating element is fixedly provided on the inner wall of the gasification furnace in circumferential direction.

Optionally, the electric heating element is fixedly provided on the inner wall of the gasification furnace in vertical direction.

Optionally, the electric heating element includes a plurality of electric heating blocks. The plurality of electric heating blocks each are electrically connected with the PLC programmable controller.

Optionally, the temperature sensor is fixedly provided on the inner wall of the gasification furnace.

Optionally, the electric heating element is provided within the circulating gasification chamber.

Optionally, the electric heating element is provided within the precombustion chamber.

Optionally, the temperature sensor is provided within the circulating gasification chamber and one or more temperature sensors are provided.

Optionally, the temperature sensor is provided within the precombustion chamber and one or more temperature sensors are provided.

Optionally, the first set value of the temperature sensor is larger than or equal to 850°C.

Optionally, the second set value of the temperature sensor within the circulating gasification chamber is less than or equal to 1050°C.

Optionally, the second set value of the temperature sensor within the precombustion chamber is less than or equal to 1150°C.

Another aspect of the present disclosure includes a method of controlling the new electric heating temperature adjusting gasification furnace with circulating fluidized bed. The method includes that
the PLC programmable controller acquires the temperature sensing value detected by the temperature sensor; the PLC programmable controller compares the acquired temperature sensing value with the preset first temperature sensing value; if the temperature sensing value is lower than the preset first temperature sensing value, the PLC programmable controller controls the electric heating element to start working.

Optionally, the controlling method further includes that the PLC programmable controller acquires the temperature sensing value detected by the temperature sensor; the PLC programmable controller compares the acquired temperature sensing value with the preset second temperature sensing value; if the temperature sensing value is higher than the preset second temperature sensing value, the PLC programmable controller controls the electric heating element to stop working.

Optionally, the PLC programmable controller controlling the electric heating element to start working includes: the PLC programmable controller controlling the current supply to the electric heating element based on the comparison difference value showing that the temperature sensing value is lower than the preset first temperature sensing value, or controlling the number of the electric heating elements which are going to start working; and/or the PLC programmable controller controlling the electric heating element to stop working includes: the PLC programmable controller controlling the current supply to the electric heating element based on the comparison difference value showing that the temperature sensing value is higher than the preset second temperature sensing value, or controlling the number of the electric heating elements which are going to stop working.

A new electric heating temperature adjusting gasification furnace with circulating fluidized bed and a method of controlling the same of the present disclosure include a gasification furnace and an electric heating device. The gasification furnace includes a circulating gasification chamber, an air distributor and a precombustion chamber. The circulating gasification chamber is located above the air distributor. The outlet of the precombustion chamber is communicated with the lower port of the air distributor. The electric heating device includes an electric heating element, a temperature sensor and PLC a programmable controller. The electric heating element is a heat-resisting metal conductive heating element. The electric heating element, the temperature sensor and the PLC programmable controller are electrically connected with one another. The electric heating element and the temperature sensor are disposed within the gasification furnace. A first temperature sensing value and a second temperature sensing value are set for the temperature sensor, and the second temperature sensing value is larger than the first temperature sensing value. When the temperature sensor detects that the temperature in the furnace is lower than the first temperature sensing value, the temperature sensor sends the detected signal to the PLC programmable controller, which will then instruct the electric heating element to heat the gasification furnace. When the temperature sensor detects that the temperature in the furnace reaches the second temperature sensing value, the temperature sensor sends the detected signal to the PLC programmable controller, which will then instruct the electric heating element to stop working. The new electric heating temperature adjusting gasification furnace with circulating fluidized bed of the present disclosure, by providing an electric heating element on the gasification furnace with circulating fluidized bed, can supply heat to the gasification furnace with circulating fluidized bed at the right moment, control the electric heating element to be energized and produce heat when the temperature in the gasification furnace with circulating fluidized bed decreases as a result of continuous feeding of cold coal, carbon-containing fly ash and gasifying agent into the furnace, so as to quickly and high-efficiently help increase the temperature of coal combustion within the gasification furnace with circulating fluidized bed, and control the electric heating element to be deenergized and stop working when the temperature in the gasification furnace with circulating fluidized bed reaches the required working temperature, so as to achieve the effect of quickly regulating and controlling the temperature in the gasification furnace in real time, which satisfies the real-time requirement of operating temperature of apparatus, improves coal conversion efficiency and saves energy.

The present disclosure has a novel and unique design, a simple structure, fast response rate, and good control effect, and can significantly improve the gas conversion efficiency of coal and lower the operating cost of apparatus.

### Brief Description of Drawings

In order to more clearly explain the technical solutions in the specific embodiments of the present disclosure or in the prior art, drawings required to be used in the description of the specific embodiments or the prior art will be briefly introduced below. Obviously, the drawings in the following description merely show some of the embodiments of the present disclosure. Other drawings also may be obtained by those ordinarily skilled in the art based on these drawings without paying creative efforts.
Fig.1 is a first structural schematic diagram of an embodiment of the present disclosure;
Fig.2 is a second front sectional structural schematic diagram of an embodiment of the present disclosure;
Fig.3 is a first flow chart of a method of controlling a new electric heating temperature adjusting gasification furnace with circulating fluidized bed of the present disclosure;
Fig.4 is a second flow chart of the method of controlling the new electric heating temperature adjusting gasification furnace with circulating fluidized bed of the present disclosure;
Fig.5 is a third flow chart of the method of controlling the new electric heating temperature adjusting gasification furnace with circulating fluidized bed of the present disclosure;
Fig.6 is a fourth flow chart of the method of controlling the new electric heating temperature adjusting gasification furnace with circulating fluidized bed of the present disclosure.

Reference signs: 1-circulating gasification chamber; 2-air distributor; 3-precombustion chamber; 4-electric heating element; 5-temperature sensor; 6- PLC programmable controller; a-coal conveying pipe; b-powdered coal conveying pipe; c-carbon-containing flying ash conveying pipe; d-gasifying agent conveying pipe; e-communicating pipe.

### Detailed Description of Embodiments

In order to make the objects, technical solutions and advantages of the embodiments of the present disclosure more clear, the technical solutions of the present disclosure will be clearly and completely described below with reference to the drawings. Apparently, the embodiments as described are merely some, but not all of the embodiments of the present disclosure. Normally, the components of the embodiments of the present disclosure described and illustrated in the drawings herein can be arranged and designed in various different configurations.

Hence, the following detailed description of the embodiments of the present disclosure provided in the drawings is not intended to limit the scope of the present disclosure as claimed, but merely shows the selected embodiments of the present disclosure. All the other embodiments obtained by those ordinarily skilled in the art based on the embodiments in the present disclosure without paying creative efforts shall fall within the scope of protection of the present disclosure.

It should be noted that similar reference signs and letters refer to similar items in the following drawings. Therefore, once a certain item is defined in one drawing, it will not be further defined or explained in subsequent drawings.

It should be noted that, in the description of the present disclosure, orientation or positional relations indicated by terms such as "center", "upper", "lower", "vertical", "horizontal", "inner" and "outer", if present, are the orientation or positional relations shown based on the drawings, only for facilitating description of the present disclosure and simplifying the description, rather than indicating or implying that the referred devices or elements must be in a particular orientation or constructed or operated in the particular orientation, and therefore they should not be construed as limiting the present disclosure. In addition, terms like "first" and "second", if present, are merely used for descriptive purpose, but should not be construed as indicating or implying relative importance.

It should also be noted that, in the description of the present disclosure, terms like "mount", "provide" and "connect", if present, should be interpreted in a broad sense, unless otherwise explicitly specified and defined. For example, a connection may be a fixed connection, or a detachable connection, or an integrated connection; may be a mechanical connection or an electric connection; or may be a direct linking, or an indirect linking via an intermediate medium, or may be an internal communication between two elements. The specific meanings of the above-mentioned terms in the present disclosure could be understood by those ordinarily skilled in the art according to specific situations.

The present disclosure will be further explained and illustrated below with reference to the drawings.

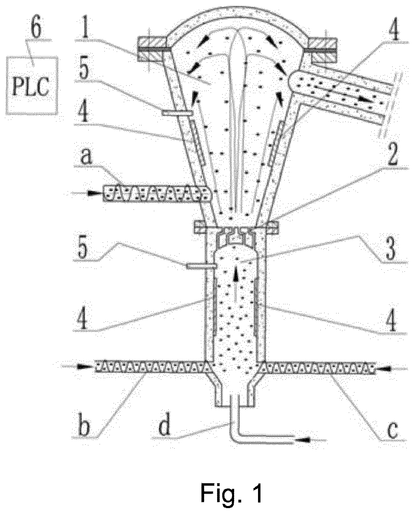

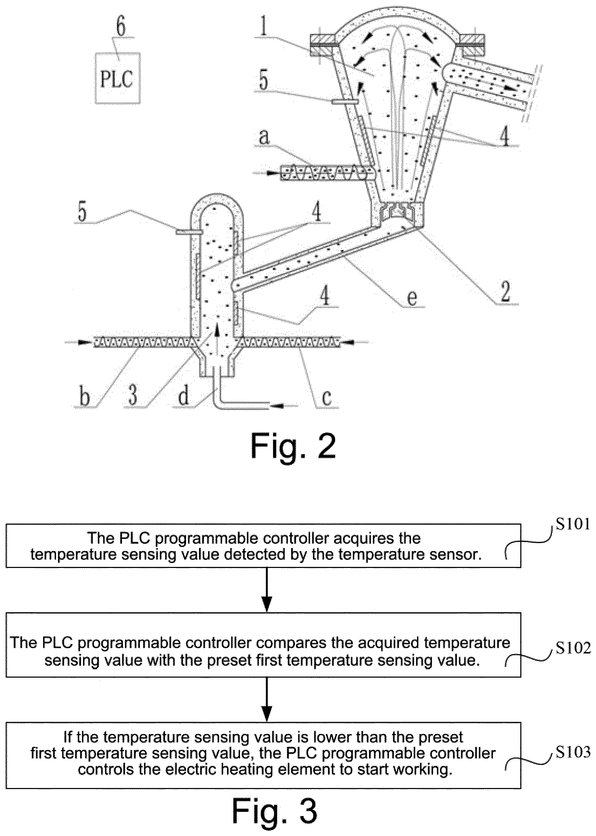

As shown in Figs. 1 and 2, the circulating gasification chamber 1 is located above the air distributor 2. The precombustion chamber 3 and the lower portion of the air distributor 2, are communicated with the inlet of the gasifying agent conveying pipe d. The electric heating element 4 is a heat-resisting metal conductive heating element. The electric heating element 4, the temperature sensor 5 and the PLC programmable controller 6 are electrically connected with one another.

### Embodiment 1:

Embodiment 1 of the present disclosure includes a new electric heating temperature adjusting gasification furnace with circulating fluidized bed, which includes a gasification furnace and an electric heating device, as shown in Fig. 1. The gasification furnace includes a circulating gasification chamber 1, an air distributor 2 and a precombustion chamber 3. The circulating gasification chamber 1 is located above the air distributor 2. The outlet of the precombustion chamber 3 is communicated with the lower port of the air distributor 2. The electric heating device includes an electric heating element 4, a temperature sensor 5 and a PLC programmable controller 6. The electric heating element 4 is a heat-resisting metal conductive heating element. The electric heating element 4 and the temperature sensor 5 each are electrically connected with the PLC programmable controller 6. The electric heating element 4 and the temperature sensor 5 are disposed within the gasification furnace. A first temperature sensing value and a second temperature sensing value are set for the temperature sensor 5, and the second temperature sensing value is larger than the first temperature sensing value. When the temperature sensor 5 detects that the temperature in the gasification furnace is lower than the first temperature sensing value, the temperature sensor 5 sends the detected signal to the PLC programmable controller 6. The PLC programmable controller 6 will then instruct the electric heating element 4 to heat the gasification furnace. When the temperature sensor 5 detects that the temperature in the gasification furnace reaches the second temperature sensing value, the temperature sensor 5 sends the detected signal to the PLC programmable controller 6. The PLC programmable controller 6 will then instruct the electric heating element 4 to stop working.

It should be noted that, first, the gasification furnace is a device which turns the fuel like coal, petroleum coke and biomass into synthesis gas. In the present embodiment, the circulating gasification chamber 1, the air distributor 2 and the precombustion chamber 3 are integrated. The circulating gasification chamber 1 is located at the upper portion of the air distributor 2, and the precombustion chamber 3 is located at the lower portion of the air distributor 2. Powdered coal, carbon-containing fly ash and gasifying agent are imported from the bottom of the precombustion chamber 3 via pipes, respectively, wherein the powdered coal is fed into the precombustion chamber 3 via powdered coal conveying pipe b, the carbon-containing fly ash is fed into the precombustion chamber 3 via carbon-containing fly ash conveying pipe c, and the gasifying agent is fed into the precombustion chamber 3 via gasifying agent conveying pipe d and preburnt within the precombustion chamber 3 under a rising temperature. The gasifying agent blows the solid particles like powdered coal into a fluidized state in which they are suspending, and carries them upwards. The upper portion of the precombustion chamber 3 is provided with a circulating gasification chamber 1 communicated with the precombustion chamber 3. And an air distributor 2 is provided between the precombustion chamber 3 and the circulating gasification chamber 1. The flowing high-temperature powdered coal, semicoke and coal gas blown upwards by the airflow enter the circulating gasification chamber via the air distributor 2. The sidewall at the bottom of the circulating gasification chamber 1 is further provided with a coal conveying pipe, which is used to feed the coal into the circulating gasification chamber. After the coal has been fully gasified over cycles in the circulating gasification chamber 1, the produced coal gas is discharged from the outlet provided on the upper portion of the circulating gasification chamber 1. The arrows in Fig. 1 illustrate the airflow direction in the circulating gasification chamber 1.

Second, an electric heating element 4 and a temperature sensor 5 are provided within the gasification furnace. The electric heating element 4 is a heat-resisting metal conductive heating element, which is used to produce heat in the energized state so as to heat the gasification furnace where the electric heating element 4 is located and increase the temperature therein. The temperature sensor 5 is used to detect the temperature of the gasification furnace. The embodiments of the present disclosure do not specifically define the electric heating element 4 and the temperature sensor 5 provided in the gasification furnace and the number of the electric heating element 4 and the temperature sensor 5. It is acceptable as long as they are able to heat the gasification furnace and increase the temperature therein and detect the ambient temperature.

Third, as shown in Fig. 1, the electric heating element 4 and the temperature sensor 5 each are electrically connected with the PLC programmable controller 6 (connection lines are not illustrated in Fig. 1). In this way, it is possible for the electric heating element 4 and the temperature sensor 5 each to transmit signals to and receive instructions from the PLC programmable controller 6.

Fourth, a first temperature sensing value and a second temperature sensing value is preset in the PLC programmable controller 6, and the second temperature sensing value is larger than the first temperature sensing value, wherein the first temperature sensing value is set to be the minimum acceptable temperature value at which the gasification furnace can operate normally and produce coal gas, and if the temperature in the gasification furnace is lower than the first temperature sensing value, the coal gasification efficiency and the carbon conversion efficiency will be decreased and harmful phenolic substances like tar will also be produced. The second temperature sensing value is set to be the maximum acceptable temperature value at which the gasification furnace can operate normally and produce coal gas. If the temperature in the gasification furnace is higher than the second temperature sensing value, on one hand, energy is wasted, and on the other hand, unsafe incidents may happen in the gasification furnace. The PLC programmable controller 6 acquires the temperature sensing value detected by the temperature sensor 5 and compares it with the above preset first temperature sensing value. If the comparison result shows that the temperature sensing value is lower than the first temperature sensing value, the PLC programmable controller 6 controls the electric heating element 4 to be energized and work to heat the environment within the gasification furnace and increase the temperature therein. The temperature sensor 5 keeps detecting the ambient temperature within the gasification furnace and outputs the detected result to the PLC programmable controller 6. When the PLC programmable controller 6 compares the acquired temperature sensing value with the above preset second temperature sensing value and the comparison result shows that the temperature sensing value is higher than the second temperature sensing value, the PLC programmable controller 6 controls the electric heating element 4 to be deenergized and stop working and do not heat the environment within the gasification furnace and increase the temperature therein any more. In this way, real-time control of the temperature in the gasification furnace is realized through the temperature detection of the temperature sensor 5 and by means of the PLC programmable controller 6.

A new electric heating temperature adjusting gasification furnace with circulating fluidized bed of the embodiments of the present disclosure includes a gasification furnace and an electric heating device. The gasification furnace includes a circulating gasification chamber, an air distributor and a precombustion chamber. The circulating gasification chamber is located above the air distributor. The outlet of the precombustion chamber is communicated with the lower port of the air distributor. The electric heating device includes an electric heating element, a temperature sensor and a PLC programmable controller. The electric heating element is a heat-resisting metal conductive heating element. The electric heating element, the temperature sensor and the PLC programmable controller are electrically connected with one another. The electric heating element and the temperature sensor are disposed within the gasification furnace. A first temperature sensing value and a second temperature sensing value are set for the temperature sensor, and the second temperature sensing value is larger than the first temperature sensing value. When the temperature sensor detects that the temperature in the furnace is lower than the first temperature sensing value, the temperature sensor sends the detected signal to the PLC programmable controller, which will then instruct the electric heating element to heat the gasification furnace. When the temperature sensor detects that the temperature in the furnace reaches the second temperature sensing value, the temperature sensor sends the detected signal to the PLC programmable controller, which will then instruct the electric heating element to stop working. The new electric heating temperature adjusting gasification furnace with circulating fluidized bed of the present disclosure, by providing an electric heating element on the gasification furnace with circulating fluidized bed, can supply heat to the gasification furnace with circulating fluidized bed at the right moment, control the electric heating element to be energized and produce heat when the temperature in the gasification furnace with circulating fluidized bed decreases as a result of continuous feeding of cold coal, carbon-containing fly ash and gasifying agent into the furnace, so as to quickly and high-efficiently help increase the temperature of coal combustion within the gasification furnace with circulating fluidized bed, and control the electric heating element to be deenergized and stop working when the temperature in the gasification furnace with circulating fluidized bed reaches the required working temperature, so as to achieve the effect of quickly regulating and controlling the temperature in the gasification furnace in real time, which satisfies the real-time requirement of operating temperature of apparatus , improves coal gas conversion efficiency and also saves energy.

Optionally, as shown in Fig. 1, the electric heating element 4 is fixedly provided on an inner wall of the gasification furnace. In this way, when the electric heating element 4 is energized and producing heat, the heat emitted from the electric heating element 4 acts directly within the gasification furnace and serves to heat the gasification furnace, increase the temperature therein, and accelerate the rate of temperature rise in the gasification furnace.

Optionally, as shown in Fig. 1, the electric heating element 4 is fixedly provided on the inner wall of the gasification furnace in circumferential direction.

It should be noted that, the embodiments of the present disclosure do not specifically limit the structure or the number of the electric heating element 4. Exemplarily, the electric heating element 4 being fixedly provided on the inner wall of the gasification furnace in circumferential direction may be interpreted in a way that the electric heating elements 4 form a structure in which they are connected with one another and their extension direction is fixedly provided along the circumferential direction of the inner wall of the gasification furnace.

Optionally, the electric heating element 4 is fixedly provided on the inner wall of the gasification furnace in vertical direction.

Similarly, the electric heating element 4 being fixedly provided on the inner wall of the gasification furnace in vertical direction may be interpreted in a way that the electric heating elements 4 form a structure in which they are connected with one another and their extension direction is fixedly provided along the vertical direction of the inner wall of the gasification furnace.

Optionally, the electric heating element 4 includes a plurality of electric heating blocks. The plurality of electric heating blocks each are electrically connected with the PLC programmable controller.

As shown in Fig. 1, the electric heating elements 4 are block-shaped electric heating blocks and a plurality of them are provided on the inner wall of the gasification furnace. The plurality of electric heating elements 4 each are electrically connected with the PLC programmable controller 6. In the above, the plurality of electric heating blocks may be fixedly provided on the inner wall of the gasification furnace in circumferential direction, or the plurality of electric heating blocks are fixedly provided on the inner wall of the gasification furnace in vertical direction.

Optionally, as shown in Fig. 1, the temperature sensor 5 is also provided on the inner wall of the gasification furnace, so that the temperature sensor 5 can directly detect and output the ambient temperature in the gasification furnace, which improves the accuracy of temperature detection of the temperature sensor 5. Similarly, the embodiments of the present disclosure do not specifically define the set position or the set number of the temperature sensor 5 on the inner wall of the gasification furnace. Fig. 1 shows one of the exemplary schematic scenarios. Those skilled in the art may make specific arrangement as required. When there are a plurality of temperature sensors 5 provided, the plurality of temperature sensors 5 should be distributedly arranged on the inner wall of the gasification furnace and each of them should be electrically connected with the PLC programmable controller 6.

It should be noted that, as the gasification furnace includes two parts, a circulating gasification chamber 1 and a precombustion chamber 3, which are communicated with each other, electric heating element 4 may be circumferentially or vertically provided respectively on the inner wall of the circulating gasification chamber 1 and of the precombustion chamber 3. Electric heating element 4 may also be independently provided within the circulating gasification chamber 1 or independently provided within the precombustion chamber 3. Moreover, the temperature sensor 5 may be provided in accordance with the electric heating element 4. That is, when an electric heating element 4 is provided within the circulating gasification chamber 1 and/or the precombustion chamber 3, a temperature sensor 5 is also provided in the circulating gasification chamber 1 and/or the precombustion chamber 3 where the electric heating element 4 is provided.

Exemplarily, as shown in Fig. 1, the electric heating element 4 is provided both in the circulating gasification chamber 1 and the precombustion chamber 3 of the gasification furnace, and the temperature sensor 5 is provided both in the circulating gasification chamber 1 and the precombustion chamber 3 of the gasification furnace, wherein the electric heating element 4 is provided on the inner wall of the circulating gasification chamber 1 and the precombustion chamber 3 in circumferential direction. This allows the temperature sensor 5 provided within the precombustion chamber 3 to detect the temperature in the precombustion chamber 3 and send the detected temperature sensing value to the PLC programmable controller 6. The PLC programmable controller 6 compares the temperature sensing value with the preset first temperature sensing value or second temperature sensing value and controls the electric heating element 4 within the precombustion chamber 3 to work or stop working based on the comparison result. Similarly, the temperature sensor 5 provided within the circulating gasification chamber 1 detects the temperature in the circulating gasification chamber 1 and sends the detected temperature sensing value to the PLC programmable controller 6. The PLC programmable controller 6 compares the temperature sensing value with the preset first temperature sensing value or second temperature sensing value and controls the electric heating element 4 within the circulating gasification chamber 1 to work or stop working based on the comparison result.

Optionally, the first set value of the temperature sensor 5, i.e. the first temperature sensing value of the temperature sensor 5 is set to be larger than or equal to 850°C. When the temperature in the gasification furnace (including the circulating gasification chamber 1 and the precombustion chamber 3) is lower than the first temperature sensing value, the coal gasification efficiency and the carbon conversion efficiency will be decreased and harmful phenolic substances like tar will be produced.

Optionally, when a temperature sensor 5 is provided within the circulating gasification chamber 1, the second set value of the temperature sensor 5 in the circulating gasification chamber 1, i.e. the second temperature sensing value of the temperature sensor 5 in the circulating gasification chamber 1, is set to be less than or equal to 1050°C.

Optionally, when a temperature sensor 5 is provided within the precombustion chamber 3, the second set value of the temperature sensor 5 in the precombustion chamber 3, i.e. the second temperature sensing value of the temperature sensor 5 in the precombustion chamber 3, is set to be less than or equal to 1150°C.

This makes it possible to adequately guarantee the gasification condition for the coal, and in the meantime, makes it possible for the raw coal to be fully burnt, which improves the coal conversion efficiency. When, in the gasification furnace, the temperature of the precombustion chamber 3 is higher than 1150°C and/or the temperature of the circulating gasification chamber 1 is higher than 1050°C, an excessively high temperature will not further improve the gas yield of the raw coal, but may cause unsafe incidents in the gasification furnace due to the excessively high temperature.

Another aspect of the embodiments of the present disclosure provides a method of controlling the new electric heating temperature adjusting gasification furnace with circulating fluidized bed. As shown in Fig. 3, the method includes:
S101, in which the PLC programmable controller 6 acquires the temperature sensing value detected by the temperature sensor 5.
S102, in which the PLC programmable controller 6 compares the acquired temperature sensing value with the preset first temperature sensing value.
S103, in which if the temperature sensing value is lower than the preset first temperature sensing value, the PLC programmable controller 6 controls the electric heating element 4 to start working.

The following description is based on an example in which the electric heating element 4 and the temperature sensor 5 are provided respectively both in the precombustion chamber 3 and the circulating gasification chamber 1 of the gasification furnace.

When the new electric heating temperature adjusting gasification furnace with circulating fluidized bed of the embodiments of the present disclosure is working, as shown in Fig. 1, cold coal enters the circulating gasification chamber 1 of the gasification furnace via coal conveying pipe a, and powdered coal, carbon-containing fly ash and gasifying agent enter the precombustion chamber 3 via powdered coal conveying pipe b, carbon-containing fly ash conveying pipe c and gasifying agent conveying pipe d, respectively, which decreases the temperature in the furnace. The temperature sensors 5 detect the temperature in the circulating gasification chamber 1 and in the precombustion chamber 3, respectively. The PLC programmable controller 6 acquires the temperature sensing value detected by one temperature sensor 5 and compares the acquired temperature sensing value with the preset first temperature sensing value. If the comparison result shows that the temperature sensing value detected by this temperature sensor 5 is lower than the preset first temperature sensing value, it is deemed that, at this time, the temperature in the gasification furnace (specifically, the circulating gasification chamber 1 or the precombustion chamber 3 where this temperature sensor 5 is located) is low and heating is required. In this case, the PLC programmable controller 6 controls the electric heating element 4 in the circulating gasification chamber 1 or in the precombustion chamber 3 where this temperature sensor 5 is located to start working to heat the environment and increase the temperature therein, so as to increase the temperature in the gasification furnace into a proper range of operating temperature as soon as possible.

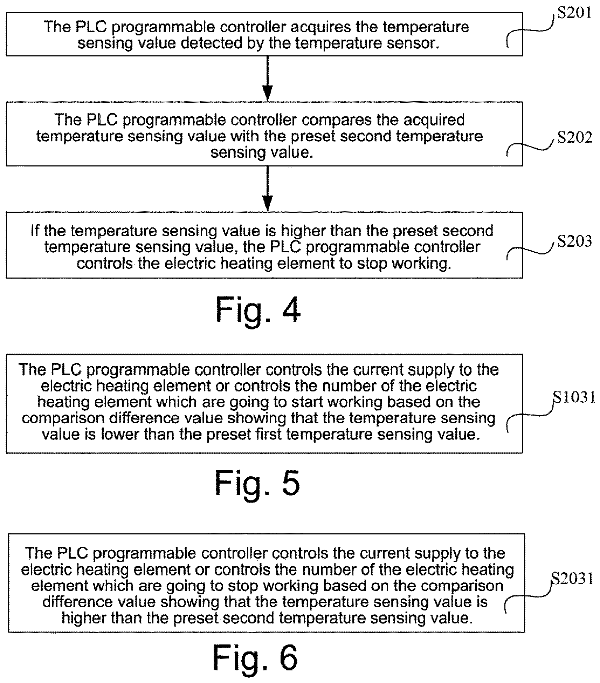

Optionally, as shown in Fig. 4, the method of controlling the new electric heating temperature adjusting gasification furnace with circulating fluidized bed of the embodiments of the present disclosure further includes:
S201, in which the PLC programmable controller 6 acquires the temperature sensing value detected by the temperature sensor 5.
S202, in which the PLC programmable controller 6 compares the acquired temperature sensing value with the preset second temperature sensing value.
S203, in which if the temperature sensing value is higher than the preset second temperature sensing value, the PLC programmable controller 6 controls the electric heating element 4 to stop working.

After the electric heating elements 4 have been heating the circulating gasification chamber 1 and the precombustion chamber 3 in the gasification furnace for a period of time, the temperature in the circulating gasification chamber 1 and in the precombustion chamber 3 is increased gradually over the working time of the electric heating elements 4. As an excessively high temperature in the circulating gasification chamber 1 and in the precombustion chamber 3 will have an unfavorable effect on the coal gasification, in order to find the proper time when the electric heating elements 4 should stop working, as shown in Fig. 4, the temperature sensor 5 detects the temperature respectively in the circulating gasification chamber 1 and in the precombustion chamber 3. The PLC programmable controller 6 acquires the temperature sensing value detected by the temperature sensor 5. In the above, where the temperature sensor 5 is provided both in the circulating gasification chamber 1 and in the precombustion chamber 3, the PLC programmable controller 6 acquires the temperature sensing value detected by the temperature sensor 5 in the circulating gasification chamber 1 and in the precombustion chamber 3, respectively. The PLC programmable controller 6 compares the acquired temperature sensing value with the preset second temperature sensing value. Similarly, where different second temperature sensing values are set for the circulating gasification chamber 1 and the precombustion chamber 3, the PLC programmable controller 6 makes comparisons separately. If the temperature sensing value is higher than the preset second temperature sensing value, it is deemed that, at this time, the temperature in the gasification furnace (specifically, the circulating gasification chamber 1 or the precombustion chamber 3 where this temperature sensor 5 is located) has risen to the high alert level, and heating and temperature rise should be stopped. Therefore, the PLC programmable controller 6 controls the electric heating elements 4 to stop working and do not heat the environment and increase the temperature therein any more.

Optionally, as shown in Fig. 5, the PLC programmable controller 6 controlling the electric heating element 4 to start working includes:
S1031, in which the PLC programmable controller 6 controls the current supply to the electric heating element 4 or controls the number of the electric heating elements 4 which are going to start working based on the comparison difference value showing that the temperature sensing value is lower than the preset first temperature sensing value.

Exemplarily, a plurality of ranges of comparison difference value from the first temperature sensing value may be further preset in the PLC programmable controller 6 and a plurality of set ranges may be provided for the current supply to the electric heating element 4. In this way, as shown in Fig. 5, when the comparison difference value showing that the temperature sensing value is lower than the preset first temperature sensing value falls within a range with large comparison difference value, in order to increase the temperature in the gasification furnace as soon as possible, the PLC programmable controller 6 may select a set range with large current to control to supply large current to the electric heating element 4, so that the electric heating element 4 will work at a high heating efficiency. In the other way around, if the comparison difference value showing that the temperature sensing value is lower than the preset first temperature sensing value falls within a range with small comparison difference value, the PLC programmable controller 6 may select a set range with small current to control the current supplied to the electric heating element 4 to be relatively small, so that the electric heating element 4 will work at a relatively low heating efficiency, for the purpose of increasing the temperature in the gasification furnace and in the meantime saving energy.

Further, it is not limited to the above exemplified manner. In addition to regulating and controlling the temperature rise efficiency in the gasification furnace by controlling the current supply to the electric heating element 4, for another example, when the electric heating element 4 is a plurality of block-shaped electric heating blocks which are arranged on the inner wall of the gasification furnace, the plurality of electric heating elements 4 each are connected with the PLC programmable controller 6. Various control modes for the electric heating element 4 may also be preset in the PLC programmable controller 6, in which way the heating capacity of the electric heating element 4 is adjusted by correspondingly controlling the number of the electric heating elements 4 which are going to start working according to the range containing the size of the difference value in which the comparison difference value showing that the temperature sensing value is lower than the preset first temperature sensing value falls. For example, the plurality of electric heating elements 4 are set as all start, 1/2 start or 1/4 start, which may also adjust the rate at which the temperature in the gasification furnace is increased by the electric heating elements 4 located therein.

Optionally, as shown in Fig. 6, the PLC programmable controller 6 controlling the electric heating element 4 to stop working includes:
S2031, in which the PLC programmable controller 6 controls the current supply to the electric heating element 4 or controls the number of the electric heating elements 4 which are going to stop working based on the comparison difference value showing that the temperature sensing value is higher than the preset second temperature sensing value.

Similarly, a plurality of ranges of comparison difference value from the second temperature sensing value may be further preset in the PLC programmable controller 6 and a plurality of set ranges may be provided for the current supply to the electric heating element 4. In this way, as shown in Fig. 6, when the comparison difference value showing that the temperature sensing value is higher than the preset second temperature sensing value falls within a range with large comparison difference value, in order to lower the temperature in the gasification furnace into the proper working temperature range as soon as possible, the PLC programmable controller 6 may select a set range with small current to control the current supplied to the electric heating element 4 to be small, so that the heating efficiency of the electric heating element 4 is reduced, or even select an input current value of 0 so that the electric heating element 4 will stop working. In the other way around, if the comparison difference value showing that the temperature sensing value is higher than the preset second temperature sensing value falls within a range with small comparison difference value, the PLC programmable controller 6 may select a set range with small current change to control the ratio of the decreased current to be small, so that the electric heating element 4 will reduce its heating efficiency at a small rangeability and the influence on the operation in the gasification furnace from sudden temperature drop may be prevented as much as possible.

Further, it is not limited to the above exemplified manner. In addition to regulating and controlling the temperature drop efficiency in the gasification furnace by controlling the current supply to the electric heating element 4, for another example, when the electric heating element 4 is a plurality of block-shaped electric heating blocks which are arranged on the inner wall of the gasification furnace, the plurality of electric heating elements 4 each are connected with the PLC programmable controller 6. Various control modes for the electric heating element 4 may also be preset in the PLC programmable controller 6, in which way the heating capacity of the electric heating element 4 is adjusted by correspondingly controlling the number of the electric heating elements 4 which are going to stop working according to the range containing the size of the difference value in which the comparison difference value showing that the temperature sensing value is higher than the preset second temperature sensing value falls. For example, the plurality of electric heating elements 4 are set as all stop, 1/2 stop or 1/4 stop, which may also adjust the rate of the temperature drop in the gasification furnace.

### Embodiment 2:

Embodiment 2 of the present disclosure includes a new electric heating temperature adjusting gasification furnace with circulating fluidized bed. As shown in Fig. 2, the new electric heating temperature adjusting gasification furnace with circulating fluidized bed of Embodiment 2 differs from the new electric heating temperature adjusting gasification furnace with circulating fluidized bed of Embodiment 1 in that it further includes a communicating pipe e provided between the precombustion chamber 3 and the air distributor 2 at the bottom of the circulating gasification chamber 1. One end of the communicating pipe e is communicated with a sidewall of the precombustion chamber 3, and the other end of the communicating pipe e is communicated with the bottom of the circulating gasification chamber 1 through the air distributor 2. In the above, the end of the communicating pipe e that is communicated with the precombustion chamber 3 is lower than the end of the communicating pipe e that is communicated with the circulating gasification chamber. The other components and parts in the new electric heating temperature adjusting gasification furnace with circulating fluidized bed, as well as the connection relationship between the components and parts and the working principle are all the same with those in Embodiment 1.

As shown in Fig. 2, in the present embodiment, the circulating gasification chamber 1 and the precombustion chamber 3 are two individual parts. The air distributor 2 is provided at the bottom of the circulating gasification chamber 1. The precombustion chamber 3 is communicated with the lower portion of the air distributor 2 at the bottom of the circulating gasification chamber 1 through the communicating pipe e. And the end of the communicating pipe e that is communicated with the precombustion chamber 3 is lower than the end of the communicating pipe e that is communicated with the circulating gasification chamber. The communicating pipe e is tilted upwards at a certain angle. The blowing airflow blows the solid particles e.g. powdered coal and semicoke in the precombustion chamber 3 to a fluidized state where they are suspending and carries them upwards into the circulating gasification chamber 1 through the communicating pipe e.

The above description only shows the optimum embodiments of the present disclosure, but is not intended to limit the scope of the present disclosure. Any equivalent variation or modification made within the scope of the present disclosure for applying for patent should be encompassed by the present disclosure.

### Industrial Applicability

The present disclosure provides a new electric heating temperature adjusting gasification furnace with circulating fluidized bed, which adequately guarantees the gasification condition for coal in the gasification furnace, especially, raw coal in subminiature gasification furnace with circulating fluidized bed may also be fully burnt, which improves the gasification rate and conversion efficiency of the coal, produces no harmful phenolic substances like tar, obtains clean coal gas and thus realizes the clean and high-efficient utilization of the coal.

## Claims

1. A new electric heating temperature adjusting gasification furnace with circulating fluidized bed, comprising a gasification furnace and an electric heating device, the gasification furnace comprising a circulating gasification chamber, an air distributor and a precombustion chamber, the circulating gasification chamber being located above the air distributor, and an outlet of the precombustion chamber being communicated with a lower port of the air distributor,
**characterized in that** the electric heating device comprises an electric heating element, a temperature sensor and a PLC programmable controller; the electric heating element is a heat-resisting metal conductive heating element; and the electric heating element, the temperature sensor, and the PLC programmable controller are electrically connected with one another;
the electric heating element and the temperature sensor are disposed within the gasification furnace;
a first temperature sensing value and a second temperature sensing value are set for the temperature sensor, and the second temperature sensing value is larger than the first temperature sensing value, when the temperature sensor detects that a temperature in the furnace is lower than the first temperature sensing value, the temperature sensor sends a detected signal to the PLC programmable controller, which will then instruct the electric heating element to heat the gasification furnace; when the temperature sensor detects that a temperature in the furnace reaches the second temperature sensing value, the temperature sensor sends a detected signal to the PLC programmable controller, which will then instruct the electric heating element to stop working.

2. The new electric heating temperature adjusting gasification furnace with circulating fluidized bed according to claim 1, wherein it further comprises a communicating pipe provided between the precombustion chamber and the air distributor at a bottom of the circulating gasification chamber, one end of the communicating pipe is communicated with a sidewall of the precombustion chamber, and the other end of the communicating pipe is communicated with the bottom of the circulating gasification chamber through the air distributor;
wherein the end of the communicating pipe that is communicated with the precombustion chamber is lower than the end of the communicating pipe that is communicated with the circulating gasification chamber.

3. The new electric heating temperature adjusting gasification furnace with circulating fluidized bed according to claim 1 or 2, wherein the electric heating element is fixedly provided on an inner wall of the gasification furnace in circumferential direction.

4. The new electric heating temperature adjusting gasification furnace with circulating fluidized bed according to claim 1 or 2, wherein the electric heating element is fixedly provided on the inner wall of the gasification furnace in vertical direction.

5. The new electric heating temperature adjusting gasification furnace with circulating fluidized bed according to claim 1, wherein the electric heating element comprises a plurality of electric heating blocks, and the plurality of electric heating blocks each are electrically connected with the PLC programmable controller.

6. The new electric heating temperature adjusting gasification furnace with circulating fluidized bed according to claim 1 or 2, wherein the temperature sensor is fixedly provided on the inner wall of the gasification furnace.

7. The new electric heating temperature adjusting gasification furnace with circulating fluidized bed according to any one of claims 1-6, wherein the electric heating element is provided in the circulating gasification chamber.

8. The new electric heating temperature adjusting gasification furnace with circulating fluidized bed according to any one of claims 1-6, wherein the electric heating element is provided in the precombustion chamber.

9. The new electric heating temperature adjusting gasification furnace with circulating fluidized bed according to any one of claims 1-8, wherein the temperature sensor is provided in the circulating gasification chamber and one or more temperature sensors are provided.

10. The new electric heating temperature adjusting gasification furnace with circulating fluidized bed according to any one of claims 1-8, wherein the temperature sensor is provided in the precombustion chamber and one or more temperature sensors are provided.

11. The new electric heating temperature adjusting gasification furnace with circulating fluidized bed according to any one of claims 1-10, wherein a first set value of the temperature sensor is larger than or equal to 850°C.

12. The new electric heating temperature adjusting gasification furnace with circulating fluidized bed according to any one of claims 1-10, wherein a second set value of the temperature sensor in the circulating gasification chamber is less than or equal to 1050°C.

13. The new electric heating temperature adjusting gasification furnace with circulating fluidized bed according to any one of claims 1-10, wherein a second set value of the temperature sensor in the precombustion chamber is less than or equal to 1150°C.

14. A method of controlling the new electric heating temperature adjusting gasification furnace with circulating fluidized bed, **characterized by** comprising:
the PLC programmable controller acquiring a temperature sensing value detected by the temperature sensor;
the PLC programmable controller comparing an acquired temperature sensing value with a preset first temperature sensing value; and
the PLC programmable controller controlling the electric heating element to start working if the temperature sensing value is lower than the preset first temperature sensing value.

15. The method of controlling the new electric heating temperature adjusting gasification furnace with circulating fluidized bed according to claim 14, wherein the method further comprises:
the PLC programmable controller acquiring a temperature sensing value detected by the temperature sensor;
the PLC programmable controller comparing an acquired temperature sensing value with a preset second temperature sensing value; and
the PLC programmable controller controlling the electric heating element to stop working, if the temperature sensing value is higher than the preset second temperature sensing value.

16. The method of controlling the new electric heating temperature adjusting gasification furnace with circulating fluidized bed according to claim 15, wherein the PLC programmable controller controlling the electric heating element to start working comprises:
the PLC programmable controller controlling a current supplied to the electric heating element or controlling the number of the electric heating element(s) which are going to start working, based on a comparison difference value showing that the temperature sensing value is lower than the preset first temperature sensing value; and/or
the PLC programmable controller controlling the electric heating element to stop working comprises:
the PLC programmable controller controlling the current supplied to the electric heating element or controlling the number of the electric heating element(s) which are going to stop working, based on a comparison difference value showing that the temperature sensing value is higher than the preset second temperature sensing value.
